# EUROPEAN PATENT SPECIFICATION

(11) **EP 0 343 976 B1**
(45) Date of publication and mention of the grant of the patent: **14.01.1998**
(21) Application number: 89305283.7
(22) Date of filing: 25.05.1989
(51) Int. Cl.: B01D 35/30

(54) **Filtering apparatus**
Filterapparat
Appareil de filtre

(30) Priority: 27.05.1988 GB 8812672
(43) Date of publication of application: 29.11.1989
(60) Divisional application: 94201137.0
(73) Proprietor: PALL CORPORATION, Glen Cove, New York 11542 (US)
(72) Inventor: Buttery, Roger A., Hampshire GU32 2JD (GB)
(74) Representative: Knott, Stephen Gilbert

(56) References cited:
- WO-A-84/04050
- DE-A- 2 434 570
- DE-A- 2 720 012
- DE-A- 2 940 144
- GB-A- 1 201 156
- US-A- 3 932 153

## Description

The present invention relates to filters and, more particularly, to an apparatus for filtering impurities from a fluid, i.e., a liquid or a gas, and a method of manufacturing such a filtering apparatus.

A fluid may contain many different impurities, and, in a variety of circumstances, those impurities must be removed before the fluid can be used. For example, in many medical applications, impurities must be filtered from a liquid before the liquid can be passed into a patient.

Ideally, a filtering apparatus for removing impurities from a fluid would be as inexpensive as possible. This is especially true in the medical field where skyrocketing costs are a major burden, and the expense of an apparatus or procedure may limit the availability of the apparatus or procedure

DE-A-2720012 discloses filtering apparatus in which end units are joined to a body. Both end units have pegs. The pegs of one end unit locate one end of a cylindrical filter medium. The other end of the medium carries a cap which closes that end of the medium and which is spaced from the other end cap by the pegs of that end cap.

Accordingly, the present invention provides an apparatus for filtering a fluid comprising a housing having an inlet and an outlet and defining a fluid flow path between the inlet and the outlet, the housing further having first and second opposing surfaces disposed an the interior of the housing and a seal edge projecting inwardly from the second surface; an end cap disposed within the housing, abutting the first surface of the housing, and having a projecting seal edge opposing the seal edge of the housing; and a filter element of a porous filter medium disposed in the fluid flow path within the housing, the filter element having an upstream surface communicating with the inlet, a downstream surface communicating with the outlet, and first and second porous end surfaces, characterized in that the first porous end surface of the filter element abuts the end cap with the seal edge of the end cap protruding into the first porous end surface of the filter element between the upstream surface and the downstream surface of the filter element for forming a seal, and the second porous end surface of the filter element abutting the second surface of the housing with the seal edge of the housing protruding into the second porous end surface of the filter element between the upstream surface and the downstream surface for forming a seal.

Further, the present invention provides a method for manufacturing a filtering apparatus comprising the steps of bringing a first porous end surface of a filter element of a porous filter medium into contact with a seal edge of a first body portion, the seal edge projecting towards the first porous end surface of the filter element, bringing a second porous end surface of the filter element into contact with a seal edge of an end cap, the seal edge projecting towards the second porous end surface of the filter element; and joining the first body portion to a second body portion to form a housing while driving the seal edge of the first body portion into the first porous end surface of the filter element and securing the end cap and the filter element within the housing solely by mechanical compression between the body portions thereby forming a seal, the seal edge of the end cap, in the joined first and second body portions also being driven into the second porous end surface of the filter element and the filter element having a first surface communicating with an inlet and a second surface communicating with an outlet.

Various aspects can be incorporated to the present invention in order to contribute to a reduction in the cost of the filtering apparatus. For example, by forming the housing from two identical body portions, the expense of making a mold for more than one body portion and the expense of separate molding procedures for more than one body portion can be eliminated. By securing the filter arrangement within the housing solely by mechanical compression, the filter apparatus may be more quickly and, therefore, more inexpensively manufactured because the additional step of adhering or welding the filter arrangement to the housing is not required. Further, by abutting one end of the filter element directly against an end of the housing, the number and, therefore, the cost of components is reduced because no end cap is required on that end of the filter element.

While it is relatively inexpensive, a filtering apparatus according to the present invention is nonetheless highly reliable and effective. Mechanical compression of the filtering apparatus ensures that it remains securely in place, and the protrusion of the seal edges into the ends of the filter element prevents the fluid from bypassing the filter element as the fluid flows through the filtering apparatus.

Filtering apparatus embodying the invention will now be described, by way of example only, with reference to the accompanying diagrammatic drawings, in which:

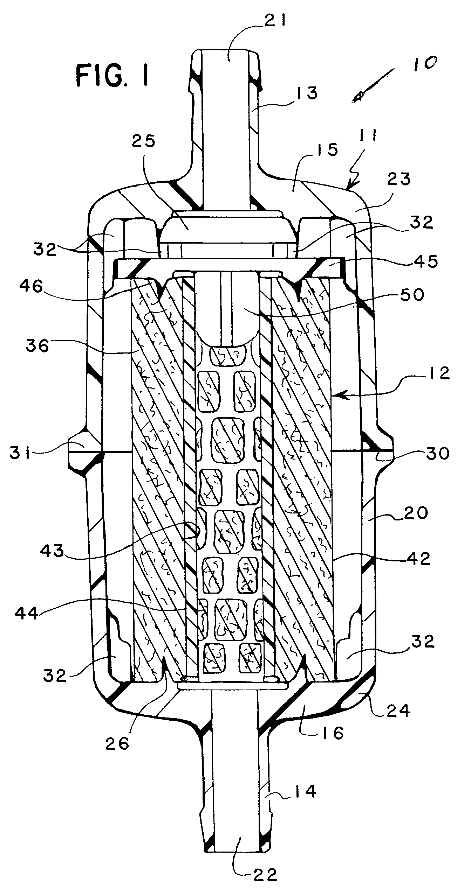

Figure 1 is a sectional side view of an exemplary filtering apparatus according to the invention; and

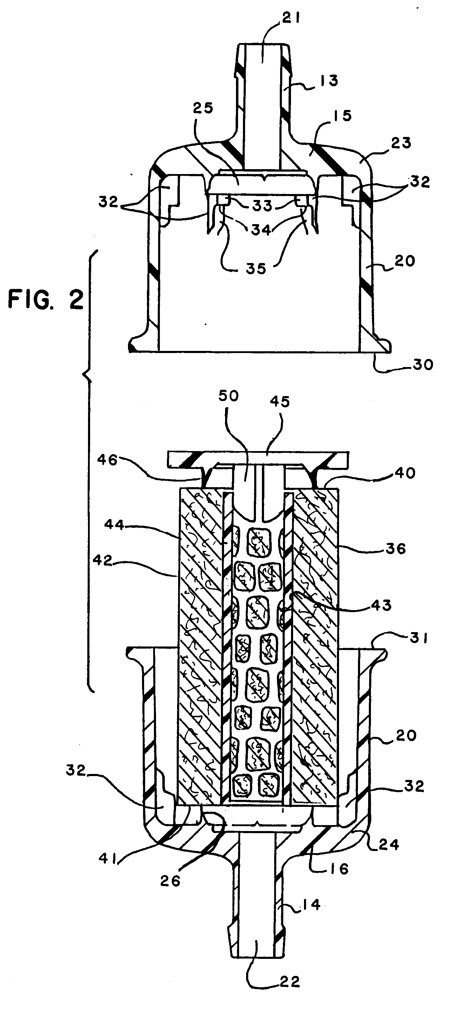

Figure 2 is an exploded sectional side view of the exemplary filtering apparatus of Figure 1.

As shown in the figures, an exemplary filtering apparatus 10 embodying the present invention generally comprises a housing 11 and a filter arrangement 12 disposed within the housing 11. The housing 11 has an inlet 13 and an outlet 14 and defines a fluid flow path through the housing between the inlet 13 and the outlet 14. The filter arrangement 12 is positioned in the fluid flow path to remove impurities from fluid flowing through the housing 11.

The housing may have any suitable configuration and may be fashioned from any appropriately impervious material which is chemically compatible with the fluid to be filtered. In the exemplary filtering apparatus 10, the housing 11 is preferably fashioned in a generally cylindrical configuration from a polymeric material, including a thermoplastic such as polyvinylchloride, acrylonitrile butadiene styrene, polyethylene, polypropylene, or polyamide. The housing 11 has an inlet end portion 15 which includes the inlet 13, an outlet end portion 16 which includes the outlet 14, and each end portion 15, 16 has a side wall 20 which side walls together substantially extend between the inlet and outlet 13, 14. The inlet 13 and the outlet 14 are disposed coaxially with respect to the housing 11 and each may be formed as any suitable connector. For example, the inlet and the outlet may be formed as threaded connectors or "quick release" connectors. In the exemplary filter housing 11, the inlet 13 and the outlet 14 are formed as hose connectors, each comprising a cylindrical protrusion having an exterior lip and a respective central opening 21, 22 which provides communication between the outside and inside of the housing 11.

The housing is formed from first and second body portions, preferably identical body portions. In the exemplary filtering apparatus 10, the housing 11 is formed from an inlet body portion 23 and an identical outlet body portion 24 joined to one another at join faces 30, 31 extending circumferentially about the side wall 20 of the housing 11. Each body portion 23, 24 includes one end portion 15, 16 of the housing 11 and a seal edge 25, 26 which projects axially inwardly from the interior of the housing 11. Preferably, each seal edge 25, 26 is formed integrally with the housing 11 and has a generally annular configuration encircling the opening 21, 22 of the inlet 13 or the outlet 14 respectively.

The filtering apparatus further includes a structure for properly positioning and securing the filter arrangement within the housing. This structure may be variously configured including, for example, as an annular boss along the interior of the housing. In the exemplary filtering apparatus 10, the housing 11 includes a plurality of ribs 32 positioned within each end portion 15, 16 of the housing 11, preferably integrally formed with the housing 11. Although the ribs may be formed in a variety of shapes, each rib 32 of the exemplary filtering apparatus 10 has a "stepped" configuration including three different surfaces. The first surface 33 of each rib is nearest the respective outer end of the end portion 15, 16 of the housing 11 at which the rib 32 is located and faces substantially radially inwardly. The second surface 34 is generally perpendicular to the first surface 33 and faces substantially axially inwardly. The third surface 35 is generally perpendicular to the second surface 34, is closer to the side wall 20 of the housing 11 than the first surface 33, and faces susbtantially radially inwardly.

The filter arrangement may be variously configured without departing from the scope of the invention. For example, it may be designed for axial flow or radial inside-out flow; it may include a pleated element of membrane sheeting or a porous membrane of annular section; or it may include a sorbent material for sorbing certain impurities. In the exemplary filtering apparatus 10, the filter arrangement 12 includes a hollow, generally cylindrical filter element 36 coaxially disposed within the housing 11 and designed for radial outside-in flow. The filter element 36 includes first and second porous plane end surfaces 40, 41, an outer cylindrical surface 42 which communicates with the inlet 13, and an inner cylindrical surface 43 which communicates with the outlet 14. The filter element 36 may comprise any suitable filter medium and may have any appropriate absolute pore rating for removing impurities. For example, in the exemplary filtering apparatus 10, the filter medium may comprise an annular section mass of polymeric microfibers, such as that available from Pall Corporation under the trademark PROFILE, and may have an absolute pore rating in the range from about 90 microns to less than 1 micron.

The exemplary filtering apparatus 10 also includes a perforated core 44 and a blind end cap 45. The perforate core 44 may be positioned circumjacent to the inner surface 43 of the filter element 36 to support the filter element 36 against the forces associated with the pressure drop across the filter element 36. The blind end cap 45 caps the first end surface 40 of the filter element 36. The blind end cap includes a generally annular seal edge 46 which protrudes into the first end surface 40 of the filter element 36, opposing the seal edge 26 on the outlet end portion 16 of the housing 11 which protrudes into the second end surface 41 of the filter element 36. The end cap 45 also includes a centring tongue 50 which fits within the core 44 to centre the end cap 45 on the first end surface 40 of the filter element 36.

The filter arrangement 12 is secured within the housing 11 solely by mechanical compression between first and second surfaces of the housing 11. For example, in the exemplary filtering apparatus 10, the filter arrangement 12 is secured between a first surface which comprises the plurality of second surfaces 34 of the ribs 32 within the inlet end portion 15 of the housing 11 and a second surface which comprises the interior surface of the outlet end portion 16 of the housing 11. The end cap 45 abuts but is not joined to the plurality of second surfaces 34 of the ribs 32 while the second end surface 41 of the filter element abuts but is not joined to the interior surface of the outlet end portion 16 of the housing 11. Further, the end cap 45 abuts but is not joined to the first end surface 40 of the filter element 36.

An exemplary method of manufacturing a filtering apparatus, such as the exemplary filtering apparatus 10, generally comprises bringing one end of a filter element into contact with a body portion having a seal edge which projects toward that end of the filter element and bringing the other end of the filter element into contact with an end cap having a seal edge which projects toward that end of the filter element. For example, the outlet body portion 24 of the housing 11 may be placed in the lower rest of a hot plate welding machine with the join face 31 of the outlet body portion 24 facing upwardly. The filter element 36 may then be placed in the outlet body portion 24 with the second end surface 41 of the filter element resting on the seal edge 26 of the outlet body portion 24. The first surfaces 33 of the ribs 32 on the outlet body portion 24 serve to centre the filter element coaxially within the housing 11. The end cap 45 may then be placed on the first end surface 40 of the filter element 36 with the centring tongue 50 positioned in the core 44 and the seal edge 46 of the end cap 45 resting on the first end surface 40 of the filter element 36. To stabilize this partial assembly, the welding machine may include a support rod which extends through the outlet opening 22 and the outlet 14 and through the centre of the core 44 and engages the centring tongue 50 of the end cap 45.

Alternatively, the inlet body portion 23 may be placed in the lower rest of a hot plate welding machine with the join face 30 facing upwardly. The blind end cap 45 may then be placed on the plurality of second surfaces 34 of the ribs 32 on the inlet body portion 23. The third surfaces 35 of the ribs 32 serve to centre the end cap 45 in the inlet body portion 23. The first end 40 of the filter element 36 may then be placed on the seal edge 46 of the end cap 45 with the centring tongue 50 positioned within the core 44.

The exemplary method of manufacturing the filtering apparatus further comprises joining the first body portion to a second body portion to form a housing, driving the seal edges into the respective ends of the filter element, and securing the end cap and the filter element within the housing solely by mechanical compression between the body portions. For example, if the filter element 36 and the end cap 45 have been placed in the outlet body portion 24 in the lower rest, the inlet body portion 23 may be placed over the outlet body portion 24 with the respective join faces 30, 31 facing one another. A hot plate may be brought into contact with the join faces 30, 31 for a predetermined amount of time sufficient to soften or melt the join faces 30, 31. The join faces 30, 31 are then forced together, joining the inlet body portion 23 to the outlet body portion 24. Alternatively, if the end cap 45 and the filter element 36 have been placed in the inlet body portion 23 in the lower rest, the outlet body portion 24 may be placed over the inlet body portion 23 with the respective join faces 31, 30 facing one another. A hot plate may be brought into contact with the join faces 31, 30 for a predetermined amount of time sufficient to soften or melt the join faces 31, 30. The join faces 31, 30 are then forced together, joining the outlet body portion 24 to the inlet body portion 23. The join faces 30, 31 may alternatively be joined in any other suitable manner including, for example, sonic welding, vibration welding, spin bonding, bonding by an adhesive, or molding a circumferential collar around the join faces 30, 31.

As the join faces 30, 31 are forced toward one another, the third surfaces 35 of the ribs 32 in the inlet body portion 23 centre the end cap 45 within the inlet body portion 23, and the second surfaces 34 of the ribs 32 contact the end cap 45. As the join faces 30, 31 are further forced toward one another, the filter arrangement 12 is compressed between the inlet and outlet body portions 23, 24, driving the seal edge 46 of the end cap 45 and the seal edge 26 of the outlet body portion 24 into the first and second ends 40, 41 of the filter element 36. Alternatively, the seal edge 46 of the end cap 45 may have been driven into the first end 40 of the filter element 36 before the filter element 36 was placed in the outlet body portion 24.

In accordance with the invention, the housing 11 is dimensioned such that once the join faces 30, 31 are joined to one another, the filter arrangement 12 is tightly secured solely by mechanical compression between the inlet and outlet body portions 23, 24. For example, in the exemplary filtering apparatus 10, the filter arrangement 12 is tightly secured between the second surfaces 35 of the ribs 32 in the inlet body portion 23 and the interior surface of the outlet end 16 of the housing 11 with the first and second ends 40, 41 of the filter element 36 tightly wedged against the end cap 45 and the outlet end 16 of the housing 11.

In the preferred mode of operation, the hose connectors of the inlet 13 and the outlet 14 of the exemplary filtering apparatus 10 may be attached to hoses (not shown) of a fluid system. Fluid to be filtered may then be directed into the exemplary filtering apparatus 10 to the inlet 13 where it is diverted by the end cap 45 to the outer, upstream surface 42 of the filter element 36. The fluid is then forced radially inwardly through the filter medium of the filter element 36 where the impurities are removed from the fluid. The fluid is prevented from flowing around the first end 40 of the filter element 36 and bypassing the filter medium of the filter element 36 by the seal formed between the first end 40 of the filter element 36 and the end cap 45. Likewise, the fluid is prevented from flowing around the second end 41 of the filter element 36 and bypassing the filter medium of the filter element 36 by the seal formed between the second end 41 of the filter element 36 and the outlet end 16 of the housing 11. The filtrate exits the filter element 36 at the inner, downstream surface 43, passes through the perforated core 44, and then flows axially through the outlet 14.

A filtering apparatus according to the present invention may be used in a variety of applications. For example, the filtering apparatus may be used to filter liquids such as water and, specifcially, as a prefilter for the water supply of a dialysis machine. Because the filtering apparatus is relatively inexpensive, it may be frequently replaced to prevent the accumulation of impurities, such as harmful bacteria. More generally, the filtering apparatus may be used as a filter for drink dispensers or as a general purpose filter for filtering a variety of fluids in laboratories.

While the invention has been described in connection with a preferred embodiment of a filtering apparatus and a preferred method for manufacturing a filtering apparatus, there is no intent to limit the invention to the preferred embodiment or method. On the contrary, the intent is to cover all alternatives, modifications, and equivalents which may be included within the scope of the invention as defined by the appended claims.

Filters sold under the trade mark PROFILE, hereinbefore referred to, have the following essential characteristics:

"A cylindrical fibrous structure comprising a fibrous mass of non-woven, synthetic, polymeric microfibers, said microfibers being substantially free of fiber-to-fiber bonding and secured to each other by mechanical entanglement or intertwining, and said fibrous mass having a substantially constant voids volume over at least a substantial portion thereof as measured in the radial direction, the constant voids volume being combined with graded fiber cross-section whereby a varying pore size is provided over said substantial portion."

## Claims

1. An apparatus for filtering a fluid comprising a housing (11) having an inlet and an outlet (13,14) and defining a fluid flow path between the inlet and the outlet (13,14), the housing (11) further having first and second opposing surfaces disposed on the interior of the housing (11) and a seal edge (26) projecting inwardly from the second surface; an end cap (45) disposed within the housing (11), abutting the first surface of the housing (11), and having a projecting seal edge (46) opposing the seal edge (26) of the housing (11); and a filter element (36) of a porous filter medium disposed in the fluid flow path within the housing (11), the filter element (36) having an upstream surface (42) communicating with the inlet (13), a downstream surface (43) communicating with the outlet (14), and first and second porous end surfaces (40,41), characterized in that the first porous end surface (40) of the filter element (36) abuts the end cap (45) with the seal edge (46) of the end cap (45) protruding into the first porous end surface (40) of the filter element (36) between the upstream surface (42) and the downstream surface (43) of the filter element for forming a seal, and the second porous end surface (41) of the filter element (36) abutting the second surface of the housing (11) with the seal edge (26) of the housing (11) protruding into the second porous end surface (41) of the filter element (36) between the upstream surface (42) and the downstream surface (43) for forming a seal.

2. An apparatus according to claim 1 wherein the seal edges (46,26) are pointed.

3. Apparatus according to claim 1 or claim 2 wherein the end cap (45) and the filter element (36) are secured within the housing (11) solely by mechanical compression between the first and second opposing surfaces of the housing (11).

4. Apparatus according to claim 1 or claim 2 wherein the end cap (45) is secured to the filter element (36) solely by means of mechanical compression between the first surface of the housing (11) and the first end surface of the filter element (36).

5. Apparatus according to any one of claims 1 to 4 wherein the filter element (36) comprises a hollow, generally annular mass of fibers.

6. Apparatus according to claim 5 wherein the mass of fibers comprises a cylindrical fibrous structure comprising a fibrous mass of non-woven, synthetic, polymeric microfibers, said microfibers being substantially free of fiber-to-fiber bonding and secured to each other by mechanical entanglement or intertwining, and said fibrous mass having a substantially uniform voids volume over at least a substantial portion thereof as measured in the radial direction, the uniform voids volume being combined with graded fiber cross-section whereby a varying pore size is provided over said substantial portion.

7. Apparatus according to any one of claims 1 to 6 wherein the housing (11) further includes first and second end portions (15,16) and a plurality of ribs (32) disposed near each end portion (15,16) of the housing, each rib (32) having first and second mutually perpendicular surfaces (33,34) wherein the plurality of first surfaces (33) of the ribs (32) of the second end portion (16) of the housing (11) encircle and engage the upstream surface (42) of the filter element (36) and the second surfaces (34) of the ribs (32) of the first end portion (15) engage the end cap (45).

8. Apparatus according to claim 7 wherein each rib (32) further includes a third surface (35) generally perpendicular to the second surface (34), the end cap being centered by the third surface (35) of the ribs (32) of the first end of the housing (11).

9. A method for manufacturing a filter apparatus comprising the steps of bringing a first porous end surface (41) of a filter element (36) of a porous filter medium into contact with a seal edge (26) of a first body portion (24), the seal edge (26) projecting towards the first porous end surface (41) of the filter element (36),
bringing a second porous end surface (40) of the filter element (36) into contact with a seal edge (46) of an end cap (45), the seal edge (46) projecting towards the second porous end surface (40) of the filter element (36); and
joining the first body portion (24) to a second body portion (23) to form a housing (11) while driving the seal edge (26) of the first body portion into the first porous end surface (41) of the filter element (36) and securing the end cap (45) and the filter element (36) within the housing (11) solely by mechanical compression between the body portions (23,24) thereby forming a seal, the seal edge (46) of the end cap (45), in the joined first and second body portions (23,24) also being driven into the second porous end surface (40) of the filter element (36) and the filter element (36) having a first surface (42) communicating with an inlet (13) and a second surface (43) communicating with an outlet (14).

10. The manufacturing method of claim 9 further comprising the step of securing the end cap (45) to the filter element (36) solely by means of mechanical compression between one of the body portions (23,24) and the filter element (36).

11. The manufacturing method of claim 9 further comprising the step of placing the first body portion (23) with a join face (30) facing upwardly into the lower rest of a hot plate welding machine and wherein the step of joining the body portions (23,24) includes the step of bringing the join faces (30,31) into contact with the hot plate for a predetermined time.

## Patentansprüche

1. Vorrichtung zum Filtern eines Fluids, umfassend ein Gehäuse (11) mit einem Einlaß und einem Auslaß (13, 14), welches einen Fluidfließweg zwischen dem Einlaß und dem Auslaß (13, 14) bildet, wobei das Gehäuse (11) ferner erste und zweite gegenüberliegende Oberflächen, welche im Inneren des Gehäuses (11) angeordnet sind, und einen Dichtungsrand (26) aufweist, welcher von der zweiten Oberfläche nach innen absteht; wobei die Vorrichtung eine Endkappe (45) aufweist, welche in dem Gehäuse (11) angeordnet ist, welche an der ersten Oberfläche des Gehäuses (11) anliegt und welche einen vorspringenden Dichtungsrand (46) aufweist, welcher dem Dichtungsrand (26) des Gehäuses (11) gegenüberliegt; und wobei die Vorrichtung ein Filterelement (36) aus einem porösen Filtermedium im Fluidfließweg innerhalb des Gehäuses (11) angeordnet aufweist, wobei das Filterelement (36) eine aufstromseitige Oberfläche (42) aufweist, welche in Verbindung mit dem Einlaß (13) steht, eine abstromseitige Oberfläche (43), welche mit dem Auslaß (14) in Verbindung steht, und erste und zweite poröse Endoberflächen (40, 41) aufweist, dadurch gekennzeichnet, daß die erste poröse Endoberfläche (40) des Filterelements (36) an der Endkappe (45) anliegt, wobei der Dichtungsrand (46) der Endkappe (45) in die erste poröse Endoberfläche (40) des Filterelements (36) zwischen der aufstromseitigen Oberfläche (42) und der abstromseitigen Oberfläche (43) des Filterelements (36) zur Bildung einer Dichtung vorspringt und wobei die zweite poröse Endoberfläche (41) des Filterelements (36) an der zweiten Oberfläche des Gehäuses (11) anliegt, wobei der Dichtungsrand (26) des Gehäuses (11) in die zweite poröse Endoberfläche (41) des Filterelements (36) zwischen der aufstromseitigen Oberfläche (42) und der abstromseitigen Oberfläche (43) zur Bildung einer Dichtung vorspringt.

2. Vorrichtung nach Anspruch 1, worin die Dichtungsränder (46, 26) zugespitzt ausgebildet sind.

3. Vorrichtung nach Anspruch 1 oder 2, worin die Endkappe (45) und das Filterelement (36) in dem Gehäuse (11) ausschließlich durch mechanische Kompressionen zwischen der ersten und der zweiten gegenüberliegenden Oberfläche des Gehäuses (11) gesichert sind.

4. Vorrichtung nach Anspruch 3, worin die Endkappe (45) an dem Filterelement (36) ausschließlich mittels mechanischer Kompression zwischen der ersten Oberfläche des Gehäuses (11) und der ersten Endoberfläche des Filterelements (36) gesichert ist.

5. Vorrichtung nach einem der Ansprüche 1 bis 4, worin das Filterelement (36) eine hohle, im wesentlichen ringförmige Masse von Fasern umfaßt.

6. Vorrichtung nach Anspruch 5, worin die Masse an Fasern eine zylindrische Faserstruktur umfaßt, welche eine faserige Masse von non-woven, synthetischen, polymeren Mikrofasern umfaßt, wobei die Mikrofasern im wesentlichen frei von Faser-Faser-Bindungen sind und miteinander mittels mechanischer Verflechtung oder Verschlingung gesichert sind und wobei die faserige Masse ein im wesentlichen gleichförmiges Porenvolumen über mindestens einen wesentlichen Teil hiervon in Radialrichtung gemessen aufweist, wobei das gleichförmige Porenvolumen mit einem abgestuften Faserquerschnitt kombiniert ist, wodurch eine variierende Porengröße über den wesentlichen Teil geschaffen wird.

7. Vorrichtung nach einem der Ansprüche 1 bis 6, worin das Gehäuse (11), ferner erste und zweite Endbereiche (15, 16) und eine Mehrzahl an Rippen (32) umfaßt, welche nahe jedem der Endbereiche (15, 16) des Gehäuses angeordnet sind, wobei jede Rippe (32) erste und zweite gegeneinander rechtwinklig angeordnete Oberflächen (33, 34) aufweist, worin die Mehrzahl der ersten Oberflächen (33) der Rippen (32) des zweiten Endbereichs (16) des Gehäuses die aufstromseitige Oberfläche (42) des Filterelements (36) umgeben und an dieser anliegen und worin die zweite Oberfläche (34) der Rippen (32) des ersten Endbereichs (15) an der Endkappe (45) anliegen.

8. Vorrichtung nach Anspruch 7, worin jede Rippe (32) ferner eine dritte Oberfläche (35) umfaßt, welche im wesentlichen rechtwinklig zu der zweiten Oberfläche (34) angeordnet ist, wobei die Endkappe durch die dritte Oberfläche (35) der Rippen (32) des ersten Endes des Gehäuses (11) zentriert wird.

9. Verfahren zur Herstellung einer Filtervorrichtung, umfassend die Schritte des Inkontaktbringens einer ersten porösen Endoberfläche (41) eines Filterelements (36) eines porösen Filtermediums mit einem Dichtungsrand (26) eines ersten Körperteils (24), wobei der Dichtungsrand (26) gegen die erste poröse Endoberfläche (41) des Filterelements (36) vorspringt,
Inkontaktbringen einer zweiten porösen Endoberfläche (40) des Filterelements (36) mit einem Dichtungsrand (46) an einer Endkappe (45), wobei der Dichtungsrand (46) gegen die zweite poröse Endoberfläche (40) des Filterelements (36) vorspringt; und
Zusammenfügen des ersten Körperteils (24) mit einem zweiten Körperteil (24), um ein Gehäuse (11) zu bilden, wobei der Dichtungsrand (26) des ersten Körperteils in die erste poröse Endaberfläche (41) des Filterelements (36) hineingetrieben wird, und Sichern der Endkappe (45) und des Filterelements (36) innerhalb des Gehäuses (11) ausschließlich mittels mechanischer Kompression zwischen den beiden Nörperteilen (23, 24), unter Ausbildung einer Dichtung hierdurch, wobei der Dichtungsrand (46) der Endkappe (45) in den zusammengefügten ersten und zweiten Körperteilen (24) ebenfalls in die zweite poröse Endoberfläche (40) des Filterelements (36) hineingetrieben wird und wobei das Filterelement (36) eine erste Oberfläche (42) aufweist, welche mit einem Einleß (13) in verbindung steht und eine zweite Oberfläche (43) aufweist, welche mit einem Auslaß (14) in Verbindung steht.

10. Herstellungsverfahren nach Anspruch 9, welches ferner den Schritt umfaßt: Sichern der Endkappe (45) an dem Filerelement (36) ausschließlich mittels mechanischer Kompression zwischen einem der Körperteile (23, 24) und dem Filterelement (36).

11. Herstellungsverfahren nach Anspruch 9, welches ferner den Schritt umfaßt: Plazieren des ersten Körperteils (23) mit einer Verbindungsstirnfläche (30), nach oben weisend, in einen unteren Teil einer Heizplattenschweißmaschine, und worin der Schritt des Verbindens der Körperteile (23, 24) den Schritt einschließt, mit dem die Verbindungsoberflächen (30, 31) mit der Heizplatte für eine vorgegebene Zeitdauer in Kontakt gebracht werden.

## Revendications

1. Appareil de filtration d'un fluide, comprenant un boîtier (11) ayant une entrée et une sortie (13, 14) et délimitant un trajet de circulation de fluide entre l'entrée et la sortie (13, 14), le boîtier (11) ayant en outre une première et une seconde surface opposées disposées à l'intérieur du boîtier (11), et un bord d'étanchéité (26) dépassant vers l'intérieur depuis la seconde surface, un capuchon (45) d'extrémité disposé dans le boîtier (11), en butée contre la première surface du boîtier (11) et ayant un bord (46) d'étanchéité en saillie opposé au premier bord d'étanchéité (26) du boîtier (11), et un élément de filtre (36) formé d'un milieu poreux de filtration placé dans le trajet de circulation de fluide à l'intérieur du boîtier (11), l'élément de filtre (36) ayant une surface amont (42) qui communique avec l'entrée (13), une surface aval (43) qui communique avec la sortie (14), et une première et une seconde surface poreuse d'extrémité (40, 41), caractérisé en ce que la première surface poreuse d'extrémité (40) de l'élément de filtre (36) est en butée contre le capuchon d'extrémité (45) avec le bord d'étanchéité (46) du capuchon d'extrémité (45) en saillie dans la première surface poreuse d'extrémité (40) de l'élément de filtre (36) entre la surface amont (42) et la surface aval (43) de l'élément de filtre pour la formation d'un joint d'étanchéité, et la seconde surface poreuse d'extrémité (41) de l'élément de filtre (36) étant en butée contre la seconde surface du boîtier (11), le bord (26) d'étanchéité du boîtier (11) dépassant dans la seconde surface poreuse d'extrémité (41) de l'élément de filtre (36) entre la surface amont (42) et la surface aval (43) pour la formation d'un joint d'étanchéité.

2. Appareil selon la revendication 1, dans lequel les bords (46, 26) du joint d'étanchéité sont pointus.

3. Appareil selon la revendication 1 ou 2, dans lequel le capuchon d'extrémité (45) et l'élément de filtre (36) sont fixés à l'intérieur du boîtier (11) uniquement par une compression mécanique entre la première et la seconde surface opposées du boîtier (11).

4. Appareil selon la revendication 3, dans lequel le capuchon d'extrémité (45) est fixé à l'élément de filtre (36) uniquement par compression mécanique entre la première surface du boîtier (11) et la première surface d'extrémité de l'élément de filtre (36).

5. Appareil selon l'une quelconque des revendications 1 à 4, dans lequel l'élément de filtre (36) est une masse de fibres creuses de forme générale annulaire.

6. Appareil selon la revendication 5, dans lequel la masse de fibres est une structure cylindrique fibreuse comprenant une masse fibreuse de microfibres polymères de synthèse non tissées, les microfibres étant pratiquement dépourvues de toute liaison entre les fibres et étant fixées mutuellement par entremêlement ou emboîtement mécanique, et la masse fibreuse ayant un volume pratiquement uniforme de vides sur au moins une partie notable de la masse, mesurée dans la direction radiale, le volume uniforme de vides étant combiné à une section étagée des fibres, si bien qu'une dimension variable de pores est donnée dans ladite partie notable.

7. Appareil selon l'une quelconque des revendications 1 à 6, dans lequel le boîtier (11) comporte en outre une première et une seconde partie d'extrémité (15, 16) et plusieurs nervures (32) placées près de chaque extrémité (15, 16) du boîtier, chaque nervure (32) ayant une première et une seconde surface (33, 34) qui sont perpendiculaires mutuellement, et plusieurs premières surfaces (33) des nervures (32) de la seconde partie d'extrémité (16) du boîtier (11) entourent la surface amont (42) de l'élément de filtre (36) et sont à leur contact et les secondes surfaces (34) des nervures (32) de la première partie d'extrémité (15) coopèrent avec le capuchon d'extrémité (45).

8. Appareil selon la revendication 7, dans lequel chaque nervure (32) comporte en outre une troisième surface (35) perpendiculaire de façon générale à la seconde surface (34), le capuchon d'extrémité étant centré par la troisième surface (35) des nervures (32) de la première extrémité du boîtier (11).

9. Procédé de fabrication d'un appareil à filtre comprenant les étapes suivantes : la mise d'une première surface poreuse d'extrémité (41) d'un élément de filtre (36) d'un milieu poreux de filtration au contact d'un bord d'étanchéité (26) d'une première partie de corps (24), le bord d'étanchéité (26) dépassant vers la première surface poreuse d'extrémité (41) de l'élément de filtre (36),
la mise d'une seconde surface poreuse d'extrémité (40) de l'élément de filtre (36) au contact d'un bord d'étanchéité (46) d'un capuchon d'extrémité (45), le bord d'étanchéité (46) dépassant vers la seconde surface poreuse d'extrémité (40) de l'élément de filtre (36), et
le raccordement de la première partie de corps (24) à une seconde partie de corps (24) pour la formation d'un boîtier (11) avec introduction du bord d'étanchéité (26) de la première partie de corps dans la première surface poreuse (41) d'extrémité de l'élément de filtre (36) et la fixation du capuchon d'extrémité (45) et de l'élément de filtre (36) dans le boîtier (11) uniquement par compression mécanique entre les parties de corps (23, 24) avec formation de cette manière d'un joint étanche, le bord d'étanchéité (46) du capuchon d'extrémité (45), dans la première et la seconde partie de corps (24) qui sont raccordées, étant aussi introduit dans la seconde surface poreuse d'extrémité (40) de l'élément de filtre (36), et l'élément de filtre (36) ayant une première surface (42) qui communique avec une entrée (13) et une seconde surface (43) qui communique avec une sortie (14).

10. Procédé de fabrication selon la revendication 9, comprenant en outre une étape de fixation du capuchon d'extrémité (45) de l'élément de filtre (36) uniquement par compression mécanique entre l'une des parties de corps (23, 24) et l'élément de filtre (36).

11. Procédé de fabrication selon la revendication 9, comprenant en outre l'étape de disposition de la première partie de corps (23) avec une face (30) de raccordement tournée vers le haut dans l'appui inférieur d'une machine de soudage à plateau chauffant, et dans lequel l'étape de raccordement des parties de corps (23, 24) comprend l'étape de mise des faces de raccordement (30, 31) au contact du plateau chauffant pendant un temps prédéterminé.
